# EUROPEAN PATENT APPLICATION

(11) **EP 2 490 395 A1**
(43) Date of publication of application: **22.08.2012**
(21) Application number: 11154351.8
(22) Date of filing: 14.02.2011
(51) Int. Cl.: H04L 29/06

(54) **Method and system for access control for near field communication**

(71) Applicant: NXP B.V., 5656 AG Eindhoven (NL)
(72) Inventor: Nowottnick, Juergen, 5656 AE, Eindhoven (NL)
(74) Representative: Krott, Michel

(57) **Abstract**

An access control method for controlling the access of an access device to a secured object is provided, which comprises the following steps: the secured object generates a first time-limited secret key by applying a cryptographic operation to a predetermined object secret key and a time information; a server unit generates a second time-limited secret key by applying the cryptographic operation to the predetermined object secret key and the time information; the server unit transmits the second time-limited secret key to the access device via a secure communication channel; the access device requests access to the secured object and transmits the second time-limited secret key to the secured object; the secured object compares the first time-limited secret key with the second time-limited secret key, and if the first time-limited secret key is equal to the second time-limited secret key, the secured object grants access, and otherwise, the secured object denies access. A corresponding access control system is also provided.
By using this method, access to a vehicle may be requested via a mobile phone comprising a Near Field Communications (NFC) tag.

## Description

### FIELD OF THE INVENTION

The invention relates to an access control method for controlling the access of an access device to a secured object. The invention also relates to an access control system for controlling the access of an access device to a secured object.

### BACKGROUND OF THE INVENTION

In recent years security applications have become important in various industries, in particular in the automotive industry. For example, access to a vehicle can be requested via a mobile phone comprising a Near Field Communications (NFC) tag. In such a situation it is important that the authenticity of the request is verified. For example, it should be checked whether the request is done by an authentic device which has not been tampered with.

According to the prior art, access control methods and corresponding systems typically make use of a trust centre or a central database server. The trust centre controls the management of secret keys that are used by a mobile phone and a car, for example, in order to perform authentication. The trust centre assigns access rights based on secured transactions and needs to communicate with both the mobile phone and the car, which is typically done via Global System for Mobile Communications (GSM) communication channels. In order to implement these communication channels not only the mobile phone needs to be equipped with a GSM communication module, but also the car. This increases the cost of the car and the access control system as a whole.

### SUMMARY OF THE INVENTION

It is an object of the invention to reduce the cost of access control methods and corresponding access control systems of the kind set forth. This is achieved by the access control method according to claim 1 and the access control system according to claim 8.

According to an aspect of the invention, an access control method for controlling the access of an access device to a secured object is provided, which comprises the following steps: the secured object generates a first time-limited secret key by applying a cryptographic operation to a predetermined object secret key and a time information; a server unit generates a second time-limited secret key by applying the cryptographic operation to the predetermined object secret key and the time information; the server unit transmits the second time-limited secret key to the access device via a secure communication channel; the access device requests access to the secured object and transmits the second time-limited secret key to the secured object; the secured object compares the first time-limited secret key with the second time-limited secret key, and if the first time-limited secret key is equal to the second time-limited secret key, the secured object grants access, and otherwise, the secured object denies access.

According to another aspect of the invention an access control method is provided, wherein the server unit further transmits a use time value to the access device, the use time value specifying an amount of time during which access to the secured object shall be granted; wherein the access device further transmits the use time value to the secured object; wherein the secured object further updates the time information after the amount of time specified by the use time value has elapsed, and further generates an updated first time-limited secret key by applying the cryptographic operation to the predetermined object secret key and the updated time information, such that the updated first time-limited secret key is different from the second time-limited secret key.

According to yet another aspect of the invention an access control method is provided, wherein the secured object and the server unit apply the cryptographic operation to the predetermined object secret key, the time information and further information. The further information may for example be a vehicle number used to increase the entropy of the time-limited secret keys. In that case there is more pseudo-random input to the cryptographic operation. The use of further information as additional input to the cryptographic operation leaves room for different implementation options.

According to yet another aspect of the invention an access control method is provided, wherein the access device comprises an NFC communication unit for communicating with the secured object and a GSM communication unit for communicating with the server unit.

According to yet another aspect of the invention an access control method is provided, wherein the secured object is a vehicle.

According to yet another aspect of the invention an access control method is provided, wherein the server unit further transmits a computer program to the access device for enabling a user to control the operations of the access device.

According to yet another aspect of the invention an access control method is provided, wherein the use time value is combined with the second time-limited secret key into a single data stream.

According to an aspect of the invention, an access control system for controlling the access of an access device to a secured object is provided, the access control system comprising, in addition to the access device and the secured object, a server unit, wherein the secured object is arranged to generate a first time-limited secret key by applying a cryptographic operation to a predetermined object secret key and a time information; wherein the server unit is arranged to generate a second time-limited secret key by applying the cryptographic operation to the predetermined object secret key and the time information; wherein the server unit is arranged to transmit the second time-limited secret key to the access device via a secure communication channel; wherein the access device is arranged to request access to the secured object and to transmit the second time-limited secret key to the secured object; wherein the secured object is arranged to compare the first time-limited secret key with the second time-limited secret key, and if the first time-limited secret key is equal to the second time-limited secret key, to grant access, and otherwise, to deny access.

According to another aspect of the invention an access control system is provided, wherein the server unit is further arranged to transmit a use time value to the access device, the use time value specifying an amount of time during which access to the secured object shall be granted; wherein the access device is further arranged to transmit the use time value to the secured object; wherein the secured object is further arranged to update the time information after the amount of time specified by the use time value has elapsed, and to generate an updated first time-limited secret key by applying the cryptographic operation to the predetermined object secret key and the updated time information, such that the updated first time-limited secret key is different from the second time-limited secret key.

According to yet another aspect of the invention an access control system is provided, wherein the secured object and the server unit are arranged to apply the cryptographic operation to the predetermined object secret key, the time information and further information. The further information may for example be a vehicle number used to increase the entropy of the time-limited secret keys. In that case there is more pseudo-random input to the cryptographic operation. The use of further information as additional input to the cryptographic operation leaves room for different implementation options.

According to yet another aspect of the invention an access control system is provided, wherein the access device comprises an NFC communication unit for communicating with the secured object and a GSM communication unit for communicating with the server unit.

According to yet another aspect of the invention an access control system is provided, wherein the secured object is a vehicle.

According to yet another aspect of the invention an access control system is provided, wherein the server unit is further arranged to transmit a computer program to the access device for enabling a user to control the operations of the access device.

According to yet another aspect of the invention an access control system is provided, wherein the use time value is combined with the second time-limited secret key into a single data stream.

### BRIEF DESCRIPTION OF THE DRAWINGS

The invention will be described in more detail with reference to the appended drawings, in which:
Fig. 1 shows a flowchart which illustrates the access control method according to the invention;
Fig. 2 shows an example of a cryptographic operation in accordance with the invention;
Fig. 3 shows a transfer of information to the access device according to the invention;
Fig. 4 shows a transfer of information between the access device and the secured object in accordance with the invention;
Fig. 5 shows another example of a cryptographic operation in accordance with the invention.

### DESCRIPTION OF PREFERRED EMBODIMENTS

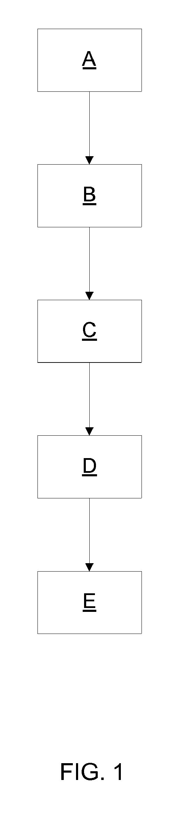

Fig. 1 shows a flowchart which illustrates the access control method according to the invention.

In a first step A the secured object, for example a car, generates a first time-limited secret key TSK_V by applying a cryptographic operation Crypt to a predetermined object secret key VSK and a time information DAY. This may be done by circuitry within the car. The predetermined object secret key VSK, or vehicle secret key, is stored in a secure manner in a memory unit of the vehicle. Each vehicle has a unique vehicle secret key. The time information DAY is for example the day information provided by a real-time clock in the vehicle. Both the vehicle secret key and the time information are available within the vehicle and at a service station from which the vehicle can be rented, for example. The result of the cryptographic operation is the time-limited secret key TSK_V, which may be valid for one day only if the vehicle is rented for a single day, for example. Optionally, further information INFO may be used as additional input to the cryptographic operation Crypt. The further information INFO may for example be a vehicle number used to increase the entropy of the time-limited secret keys. In that case there is more pseudo-random input to the cryptographic operation. The use of further information INFO as additional input to the cryptographic operation leaves room for different implementation options.

In a second step B a server unit, located e.g. at the service station and also referred to as a trust centre or a central database server, generates a second time-limited secret key TSK by applying the same cryptographic operation Crypt to the predetermined object secret key VSK, the time information DAY and optionally the further information INFO.

In a third step C the server unit transmits the second time-limited secret key TSK to the access device AD, for example a mobile phone equipped with an NFC tag, via a secure communication channel.

In a fourth step D the access device AD requests access to the secured object OBJ and transmits the second time-limited secret key TSK to the secured object OBJ.

In a fifth step E the secured object OBJ compares the first time-limited secret key TSK_V with the second time-limited secret key TSK, and if the first time-limited secret key TSK_V is equal to the second time-limited secret key TSK, the secured object OBJ grants access, and otherwise, it does not grant access.

Thereby, authentication is performed in a cost-effective way, because there is no need to provide a GSM communication channel between the secured object, i.e. the vehicle, and the server unit located at the service station. The specific details of the authentication procedure, i.e. the details which go beyond the comparison of the time-limited secret keys as such, fall outside the scope of the invention. The skilled person will appreciate that the procedure can be implemented in various ways which are known per se. The same remark applies to the specific algorithm used for the cryptographic operation in order to generate the time-limited secret keys.

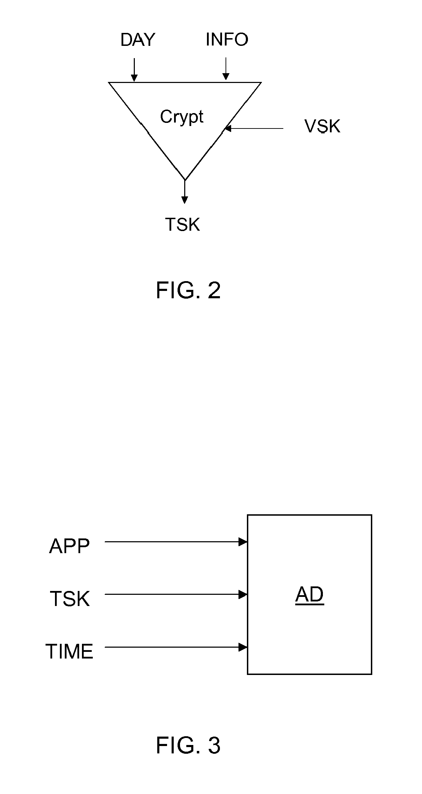

Fig. 2 shows an example of a cryptographic operation in accordance with the invention. Basically, it shows how the server unit generates a second time-limited secret key TSK by applying the cryptographic operation Crypt to the predetermined object secret key VSK and the time information DAY. The first time-limited secret key TSK_V is generated within the secured object OBJ by applying the same cryptographic operation Crypt to the predetermined object secret key VSK and the time information DAY (not shown).

Fig. 3 shows a transfer of information to the access device AD according to the invention. The access device AD, for example a mobile phone, receives from the server unit a computer program or application APP which enables the user to control the operations of the access device AD with regard to the access to the secured object OBJ. Furthermore, the access device AD receives the second time-limited secret key TSK and the use time value TIME.

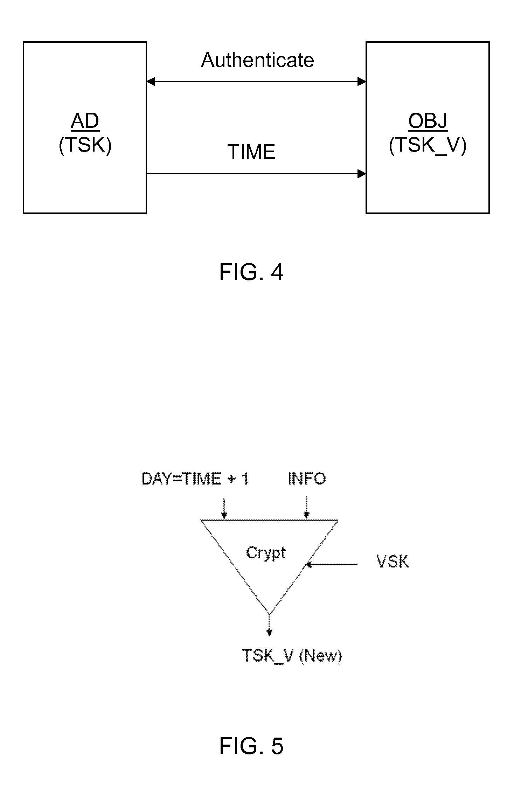

Fig. 4 shows a transfer of information between the access device AD and the secured object OBJ in accordance with the invention. Basically, the authentication process Authenticate is based on the comparison of the first time-limited secret key TSK_V stored within the secured object OBJ and the second time-limited secret key TSK stored within the access device AD. Access shall be granted if the first time-limited secret key TSK_V is equal to the second time-limited secret key TSK, and otherwise, access shall be denied. Furthermore, the access device AD transmits the use time value TIME to the secured object OBJ. The use time value TIME specifies the amount of time during which access to the secured object OBJ shall be granted, or in other words, it specifies the amount of time during which the second time-limited secret key TSK shall be valid.

Fig. 5 shows another example of a cryptographic operation in accordance with the invention. In particular, it shows how the second time-limited secret key TSK is invalidated by changing the first time-limited secret key TSK_V, such that first time-limited secret key TSK_V is no longer equal to the second time-limited secret key TSK and access to the secured object OBJ is denied. In this example, the time information DAY is modified using the use time value TIME. As a result the cryptographic operation Crypt yields an updated first time-limited secret key TSK_V (New), which is different from the original first time-limited secret key TSK_V because one of the inputs of the cryptographic operation Crypt has changed. After invalidation a new second time-limited secret key TSK must be generated by the server unit at the service station, by means of the updated first time-limited secret key TSK_V (New), in order to enable another access device, for example, to access the secured OBJ (not shown).

The above-mentioned preferred embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SYMBOLS

- DAY: time information
- INFO: further information
- TIME: use time value
- Crypt: cryptographic operation
- VSK: object secret key
- TSK_V: first time-limited secret key
- TSK: second time-limited secret key
- TSK_V (New): updated first time-limited secret key
- APP: computer program
- AD: access device
- OBJ: secured object
- Authenticate: authentication

## Claims

1. An access control method for controlling the access of an access device (AD) to a secured object (OBJ), the access control method comprising the following steps:
a) the secured object (OBJ) generates a first time-limited secret key (TSK_V) by applying a cryptographic operation (Crypt) to a predetermined object secret key (VSK) and a time information (DAY);
b) a server unit generates a second time-limited secret key (TSK) by applying the cryptographic operation (Crypt) to the predetermined object secret key (VSK) and the time information (DAY);
c) the server unit transmits the second time-limited secret key (TSK) to the access device (AD) via a secure communication channel;
d) the access device (AD) requests access to the secured object (OBJ) and transmits the second time-limited secret key (TSK) to the secured object (OBJ);
e) the secured object (OBJ) compares the first time-limited secret key (TSK_V) with the second time-limited secret key (TSK), and if the first time-limited secret key (TSK_V) is equal to the second time-limited secret key (TSK), the secured object (OBJ) grants access, and otherwise, the secured object (OBJ) denies access.

2. An access control method as claimed in claim 1,
wherein the server unit further transmits, under step c), a use time value (TIME) to the access device (AD), the use time value (TIME) specifying an amount of time during which access to the secured object (OBJ) shall be granted;
wherein the access device (AD) further transmits, under step d), the use time value (TIME) to the secured object (OBJ);
wherein the secured object (OBJ) further updates the time information (DAY) after the amount of time specified by the use time value (TIME) has elapsed, and further generates an updated first time-limited secret key (TSK_V (New)) by applying the cryptographic operation (Crypt) to the predetermined object secret key (VSK) and the updated time information (DAY), such that the updated first time-limited secret key (TSK_V (New)) is different from the second time-limited secret key (TSK).

3. An access control method as claimed in claim 1,
wherein the secured object (OBJ) and the server unit apply the cryptographic operation (Crypt) to the predetermined object secret key (VSK), the time information (DAY) and a further information (INFO).

4. An access control method as claimed in claim 1,
wherein the access device (AD) comprises an NFC communication unit for communicating with the secured object (OBJ) and a GSM communication unit for communicating with the server unit.

5. An access control method as claimed in claim 1,
wherein the secured object (OBJ) is a vehicle.

6. An access control method as claimed in claim 1,
wherein the server unit further transmits a computer program (APP) to the access device (AD) for enabling a user to control the operations of the access device (AD).

7. An access control method as claimed in claim 2,
wherein, under steps c) and d), the use time value (TIME) is combined with the second time-limited secret key (TSK) into a single data stream.

8. An access control system for controlling the access of an access device (AD) to a secured object (OBJ), the access control system comprising, in addition to the access device (AD) and the secured object (OBJ), a server unit,
wherein the secured object (OBJ) is arranged to generate a first time-limited secret key (TSK_V) by applying a cryptographic operation (Crypt) to a predetermined object secret key (VSK) and a time information (DAY);
wherein the server unit is arranged to generate a second time-limited secret key (TSK) by applying the cryptographic operation (Crypt) to the predetermined object secret key (VSK) and the time information (DAY);
wherein the server unit is arranged to transmit the second time-limited secret key (TSK) to the access device (AD) via a secure communication channel;
wherein the access device (AD) is arranged to request access to the secured object (OBJ) and to transmit the second time-limited secret key (TSK) to the secured object (OBJ);
wherein the secured object (OBJ) is arranged to compare the first time-limited secret key (TSK_V) with the second time-limited secret key (TSK), and if the first time-limited secret key (TSK_V) is equal to the second time-limited secret key (TSK), to grant access, and otherwise, to deny access.

9. An access control system as claimed in claim 8,
wherein the server unit is further arranged to transmit a use time value (TIME) to the access device (AD), the use time value (TIME) specifying an amount of time during which access to the secured object (OBJ) shall be granted;
wherein the access device (AD) is further arranged to transmit the use time value (TIME) to the secured object (OBJ);
wherein the secured object (OBJ) is further arranged to update the time information (DAY) after the amount of time specified by the use time value (TIME) has elapsed, and to generate an updated first time-limited secret key (TSK_V (New)) by applying the cryptographic operation (Crypt) to the predetermined object secret key (VSK) and the updated time information (DAY), such that the updated first time-limited secret key (TSK_V (New)) is different from the second time-limited secret key (TSK).

10. An access control system as claimed in claim 8,
wherein the secured object (OBJ) and the server unit are arranged to apply the cryptographic operation (Crypt) to the predetermined object secret key (VSK), the time information (DAY) and a further information (INFO).

11. An access control system as claimed in claim 8,
wherein the access device (AD) comprises an NFC communication unit for communicating with the secured object (OBJ) and a GSM communication unit for communicating with the server unit.

12. An access control system as claimed in claim 8,
wherein the secured object (OBJ) is a vehicle.

13. An access control system as claimed in claim 8,
wherein the server unit is further arranged to transmit a computer program (APP) to the access device (AD) for enabling a user to control the operations of the access device (AD).

14. An access control system as claimed in claim 9,
wherein the use time value (TIME) is combined with the second time-limited secret key (TSK) into a single data stream.
